# EUROPEAN PATENT APPLICATION

(11) **EP 1 811 718 A1**
(43) Date of publication of application: **25.07.2007**
(21) Application number: 07000252.2
(22) Date of filing: 08.01.2007
(51) Int. Cl.: H04L 12/24, H04L 12/56

(54) **Complex network management system and method thereof**

(30) Priority: 18.01.2006 KR 20060005564
(71) Applicant: Samsung Electronics Co., Ltd., Suwon-si, Gyeonggi-Do (KR)
(72) Inventor: Lee, Ki-Cheol, Giheung-gu, Yongin-si Gyeonggi-do (KR); Nam, Kee-Sung, Seoul (KR)
(74) Representative: Lang, Johannes

(57) **Abstract**

In a system and method for managing a complex network, including an access network, a metro network, or the like, the method includes the steps of: requesting, at a first terminal, call set-up to perform the Voice over Internet Protocol (VoIP) call with a second terminal; collecting available bandwidth information of an access network to which each of the first and second terminals belongs, and available bandwidth information of a metro network linked to the access network; and allowing the call set-up request when the available bandwidths of the access network and the metro network are larger than a bandwidth for the VoIP call. Accordingly, resources and performance of the complex network can be continuously controlled, and a high-quality and large-capacity service Quality of Service (QoS) guarantee can be provided.

## Description

### BACKGROUND OF THE INVENTION

### Technical Field

The present invention relates to a complex network control system for controlling and managing mutually different networks such as an access network and a metro network, and a method thereof.

### Related Art

In a general access network and a metro network, users have been supplied with voice, data, and broadcast services via separate, respective networks such as a voice network, a data network, and a broadcast network. However, recent technological trends toward wired/wireless integration and broadcast/communication integration have resulted in considerable research and development aimed at building a Next Generation Network (NGN) which can provide users with voice, data, and broadcast services via a single integrated network.

It is expected that a core network in the NGN will be built based on Multi Protocol Label Switching (MPLS). It is also expected that a metro network will be built as an IP-based packet network. In contrast, it is expected that access networks will be built as various wired and/or wireless networks.

As such, in order to provide subscribers with guaranteed Quality of Service (QoS) via the NGN into which various types of the networks are converged, a QoS control management mechanism should be introduced into the access and metro networks.

Conventional IP-based access and metro networks have been operated on the basis of maximum efficiency, and thus could not provide users with guaranteed QoS services. To cope with this problem, class-based QoS mechanisms, such as Diffserv, 802.1p/q, and the like, were introduced. However, continuous control management after initial setting was not reflected. Furthermore, different access networks are managed by different control methods, and thus seamless QoS cannot be guaranteed for communication between heterogeneous networks.

### SUMMARY OF THE INVENTION

It is an object of the present invention to provide a complex network control system for controlling and managing mutually different networks such as an access network and a metro network, and a method thereof.

A first aspect of the present invention provides a method of controlling a Voice over Internet Protocol (VoIP) call between first and second terminals belonging to heterogeneous access networks, the method comprising the steps of: requesting, at the first terminal, call set-up to perform the VoIP call with the second terminal; collecting available bandwidth information of an access network to which each of the first and second terminals belongs, and available bandwidth information of a metro network linked to the access network; and allowing the call set-up request when the available bandwidths of the access network and the metro network are larger than a bandwidth for the VoIP call.

In this case, the method may further comprise the step of: identifying an optimal virtual path linking the heterogeneous access networks to each other using the available bandwidth information, and linking a call between the first and second terminals using the virtual path.

In addition, the method may further comprise the step of: after the call set-up is completed according to the call set-up request, updating the available bandwidth information of the metro network and the access network to which the first and second terminals belong.

A second aspect of the present invention provides a complex network management system which comprises at least one access network and a metro network, the system comprising: a Topology/Resource Management Module (TRM) for collecting and managing resource information of the complex network; a Policy Rule Decision Module (PRD) for determining a limit network resource authenticating a call transmitted to the access network or the metro network and a policy with respect to the limit network resource; and a Connection Admission Control Module (CAM) for comparing the network resource information with the limit network resource, and for determining whether a call set-up request to be transmitted to the complex network is allowed.

In this case, the network resources may comprise at least one of topology, bandwidth, delay time, and delay variance of the network, and the access network may comprise at least one of an Active Optical Network (AON)-type Fiber To The Home (FTTH) network, a Passive Optical Network (PON)-type FTTH network, a Wibro Network, and a Wireless Local Area Network (WLAN).

The complex network management system may further comprise a Policy Interface Module (PIM) for converting a policy received from the PRD to a protocol capable of being analyzed in each of the networks, and for transmitting the protocol to each of the networks. The PIM may identify a target network to which the policy is to be applied using a Management Information Base (MIB), and may generate a Command Line Interface (CLI) command or a Simple Network Management Protocol (SNMP) Object which is capable of being analyzed by the target network.

In addition, the complex network management system may further comprise: a Traffic Monitoring Module (TM) for measuring traffic status of the complex network, and for notifying the PRD when the measured traffic exceeds the limit network resource; a fault management module for monitoring whether a fault occurs in a component of the complex network, and for notifying the PRD when a fault occurs; and a Performance Management (PM) module for collecting performance information of each component of the complex network, and for notifying the PRD when a fault occurs in performance of the component.

The PRD may further comprise an event policy module which, upon receipt of at least one of a traffic exceeding event, a fault occurrence event, and a performance fault event of a component, displays the event to an operator, and delivers the policy for coping with the event to the PIM.

In addition, the TRM may comprise a virtual path management module which determines an optimal virtual path linking heterogeneous access networks to each other using the resource information of the metro network, and a topology/resource table which stores the resource information of the complex network in the form of a list, and updates the resource information when the resource information changes.

A third aspect of the present invention provides a method of managing a complex network composed of at least one access network and a metro network, the method comprising the steps of: collecting and managing resource information of the complex network; determining a limit network resource for authenticating a call to be transmitted to the access network or the metro network, and a policy with respect to the limit network resource; and comparing the network resource information with the limit network resource, and determining whether a Call Admission Control (CAC) request to be transmitted to the complex network is allowed.

The method may further comprise the step of converting the determined policy to a protocol capable of being analyzed in each of the networks, and transmitting the protocol to each of the networks.

The network resources may comprise at least one of topology, bandwidth, delay time, and delay variance of the network, and the access network may comprise at least one of an Active Optical Network (AON)-type Fiber To The Home (FTTH) network, a Passive Optical Network (PON)-type FTTH network, a Wibro Network, and a Wireless Local Area Network (WLAN).

The method may further comprise the steps of: measuring traffic status of the complex network, and displaying to an operator when the measured traffic exceeds the limit network resource; monitoring whether a fault occurs in components of the complex network, and displaying to an operator when a fault occur; and collecting performance information of the components of the complex network, and displaying to an operator when a fault occurs in the performance of a component.

### BRIEF DESCRIPTION OF THE DRAWINGS

A more complete appreciation of the invention, and many of the attendant advantages thereof, will be readily apparent as the same becomes better understood by reference to the following detailed description when considered in conjunction with the accompanying drawings in which like reference symbols indicate the same or similar components, wherein:
FIG. 1 is a block diagram showing the configuration of an access network and a metro network;
FIG. 2 is a block diagram showing the configuration of a network including an Integrated Network Control Platform (INCP) in accordance with an exemplary embodiment of the present invention;
FIG. 3 is a block diagram showing an internal configuration of a network including an INCP in accordance with an exemplary embodiment of the present invention;
FIG. 4 is a flowchart showing the operation of a Policy Rule Decision Module (PRD) in accordance with another exemplary embodiment of the present invention;
FIG. 5 is a flowchart showing the operation of a Topology/Resource Management Module (TRM) in accordance with still another exemplary embodiment of the present invention;
FIG. 6 is a flowchart showing the operation of a Connection Admission Control Module (CAM) in accordance with yet another exemplary embodiment of the present invention;
FIG. 7 is a flowchart showing the operation of a Traffic Monitoring Module (TM) in accordance with yet another exemplary embodiment of the present invention;
FIG. 8 is a flowchart showing the operation performed when an event of a PRD is generated in accordance with yet another exemplary embodiment of the present invention;
FIG. 9A is a block diagram showing the configuration of a network for a VoIP call between a Passive Optical Network (PON) user and a Wibro user in accordance with yet another exemplary embodiment of the present invention; and
FIG. 9B is a flowchart showing the operation of the complex network control system of FIG. 9A.

### DETAILED DESCRIPTION OF THE INVENTION

Hereinafter, a complex network control system for controlling and managing mutually different networks, such as an access network and a metro network, according to the present invention will be described more fully with reference to the accompanying drawings.

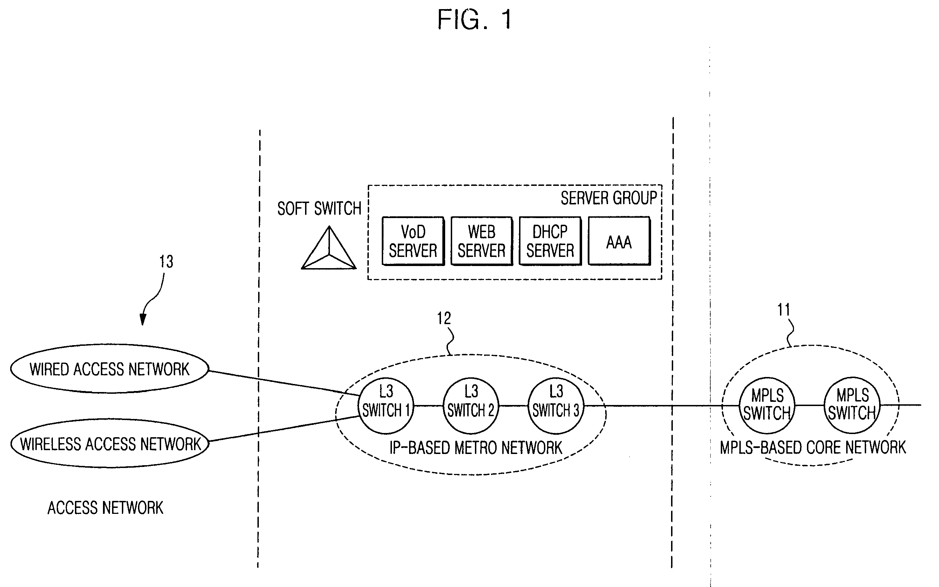

FIG. 1 is a block diagram showing the configuration of an access network and a metro network.

In general, users have been supplied with voice, data, and broadcast services via separate, respective networks such as a voice network, a data network, and a broadcast network. However, recent technological trends toward wired/wireless integration and broadcast/communication integration have resulted in considerable research and development aimed at building a Next Generation Network (NGN) which can provide users with voice, data, and broadcast services via a single integrated network. It is expected that a core network 11 in the NGN will be built based on Multi Protocol Label Switching (MPLS) as shown in FIG. 1. It is expected that a metro network 12 will be built as an IP-based packet network. In contrast, it is expected that an access network 13 will be built as various wired and/or wireless networks. As such, in order to provide subscribers with guaranteed Quality of Service (QoS) via the NGN into which various types of the networks are converged, a QoS control management mechanism should be introduced into the access and metro networks.

IP-based access and metro networks have been operated on the basis of maximum efficiency, and thus could not provide users with guaranteed QoS services. To cope with this problem, class-based QoS mechanisms such as Diffserv, 802.1p/q, and the like were introduced. However, continuous control management after initial setting was not reflected. Furthermore, different access networks are managed by different control methods, and thus seamless QoS cannot be guaranteed for communication between heterogeneous networks.

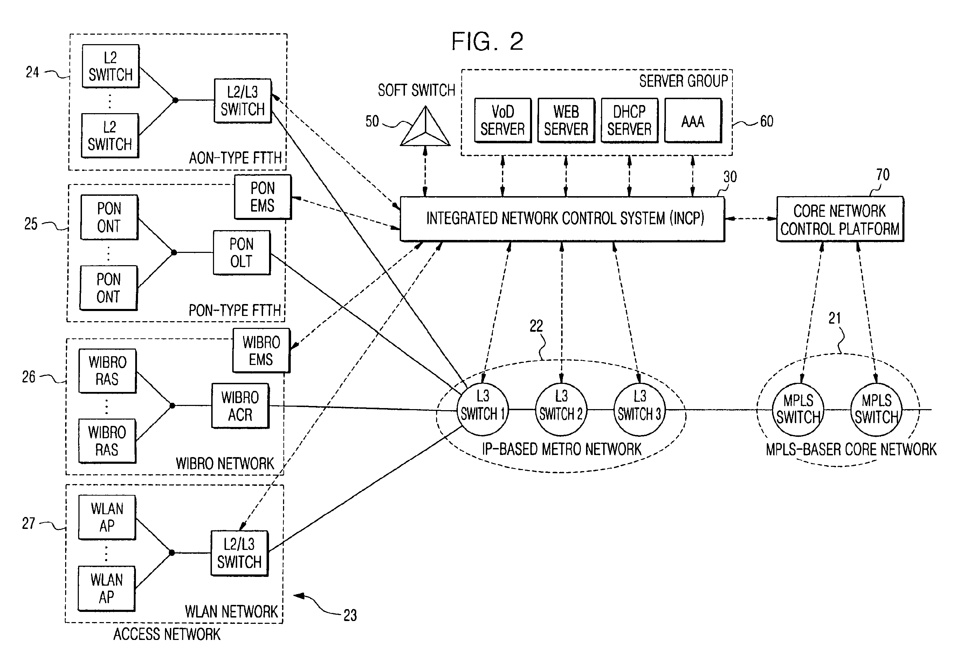

FIG. 2 is a block diagram showing the configuration of a network including a complex network control system in accordance with an exemplary embodiment of the present invention.

As shown in FIG. 2, a broadband network may be composed of an access network 23, an IP-based metro network 22, a Multi Protocol Label Switching (MPLS)-based core network 21, and so forth. The kind and topology of such a network can be changed if necessary.

Examples of the access network 23 are an Active Optical Network (AON)-type Fiber To The Home (FTTH) network 24, a Passive Optical Network (PON)-type FTTH network 25, a Wibro Network 26, a Wireless Local Area Network (WLAN) 27, and so forth. The AON-type FTTH network 24 may be composed of L2 switches and an L2/L3 switch, and the PON-type FTTH network 25 may be composed of a PON Optical Line Termination (OLT) and PON Optical Network Terminations (ONTs). In addition, the Wibro network 26 may be composed of an Access Route Control (ACR), a Radio Access Station (RAS), and so forth, and the WLAN 27 may be composed of an L2/L3 switch and Access Points (APs).

The metro network 22 is an IP-based backbone network, and may be composed of at least one L3 switch. The core network 21 is composed of several MPLS Switches. In addition, a soft switch 50, a server group 60, and so forth take charge of control and application layers. The server group in charge of the application layer has a server disposed for service to be provided. It can be seen from FIG. 2 that a Video on Demand (VOD) server, a web server, a Dynamic Host Configuration Protocol (DHCP) server, and an Authentication, Authorization, Accounting (AAA) are included in the server group 60.

An Integrated Network Control Platform (INCP) 30 is a main network of the present invention, which integrally controls and manages the above-described access network 23, the metro network 22, and so forth. Such an INCP 30 can interact with a core network control platform 70 to control the core network.

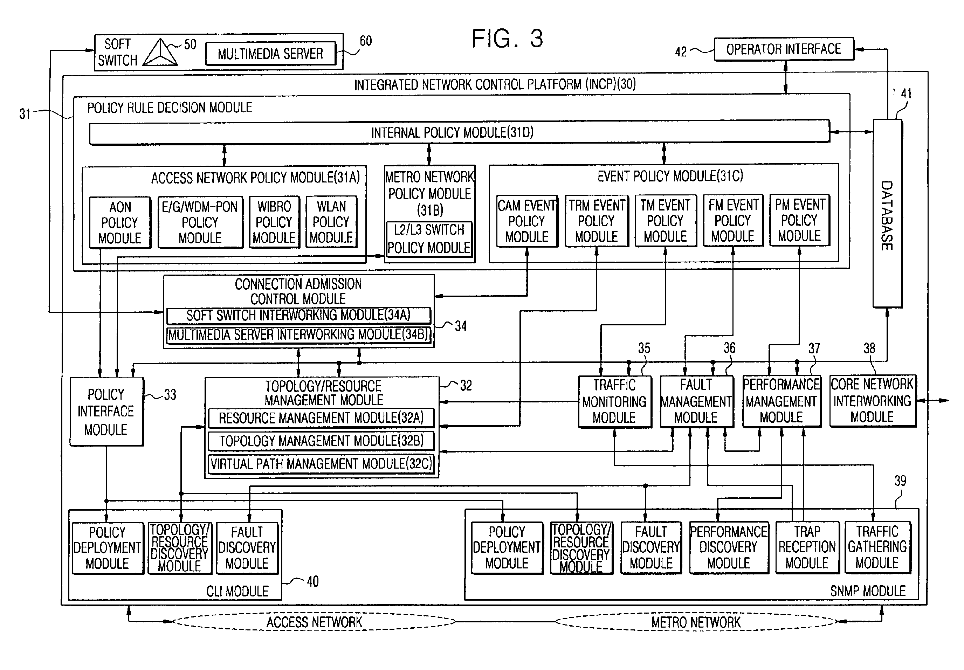

FIG. 3 is a block diagram showing an internal configuration of a network including an INCP in accordance with an exemplary embodiment of the present invention.

The INCP 30 may be composed of a Policy Rule Decision Module (PRD) 31, a Topology/Resource Management Module (TRM) 32, a Connection Admission Control Module (CAM) 34, a Policy Interface Module (PIM) 33, a Traffic Monitoring Module (TM) 35, a Fault Management Module 36, a Performance Management Module (PM) 37, a Command Line Interface (CLI) module 40, a Simple Network Management Protocol (SNMP) module 39, a database 41, and a core network interworking module 38.

The PRD 31 acts to determine and reflect a policy regarding control and management of the access network 23 and the metro network 22. In particular, the PRD 31 sets a limit network resource for authenticating a call to be transmitted from a complex network. That is, it may set the limit network resource and determine the policy in a way that allows the transmitted call to be authenticated only when an available limit network resource is greater than the limit network resource.

Such a PRD 31 may be composed of an access network policy module 31 A, a metro network policy module 31 B, an event policy module 31C, and an internal policy module 31D.

The access network policy module 31A is, in turn, composed of an AON policy module, an E/G/WDM-PON policy module, a Wibro policy module, and a WLAN policy module, and each module determines the policy of the corresponding access network.

In addition, the metro network policy module 31 B includes an L2/L3 switch policy module. The event policy module 31C may be composed of a CAM event policy module, a TRM event policy module, a TM event policy module, an FM event policy module, and a PM event policy module, which determine the policy of the event notified from the CAM 34, the TRM 32, the TM 35, the FM 36, and the PM 37, respectively.

The internal policy module 31 D delivers a policy input from an operator to the corresponding policy module in charge of the policy. For example, when a user inputs a policy for controlling the Wibro network 26, the internal policy module 31D serves to deliver the corresponding policy to the Wibro policy module within the access network policy module 31A.

The TRM 32 collects and manages resources of each of the access network 23 and the metro network 22. The TRM 32 manages the network configuration according to the policy of the PRD 31. Network topology, bandwidth, delay time, delay variance, and so forth are collectively referred to as network resources. In this case, network topology relates to network configuration shape such as bus type, star type, tree type, or ring type.

The topology management module 32B and the resource management module 32A within the TRM 32 manage the topology and resources of the network, respectively. The TRM 32 generates and manages a virtual path between the L2/L3 switches for effective management of network resources and a Call Admission Control (CAC) function of the CAM 34, and this path is generated and managed by the virtual path management module 32C. Such a virtual path corresponds to a path for optimally exchanging data between heterogeneous networks. That is, the TRM 32 sets the optimal virtual path in advance, and provides optimal service using the virtual path when a link between the heterogeneous networks is required.

In addition, the TRM 32 collects network resource information from components of the access network 23 and the metro access 22, and generates a Topology/Resource (T/R) table. Such a T/R table may be a list type. The TRM 32 also updates the corresponding information whenever the network resources change.

The CAM 34 takes charge of a CAC function which determines whether call set-up is allowed for a call service such as VoIP and a moving picture service such as VoD. The CAM 34 includes a soft switch interworking module 34A and a multimedia server interworking module 34B. These modules receive call set-up requests from the soft switch 50 and the multimedia server 60, respectively. The CAM receiving the requests identifies the resource information on the T/R table generated in the TRM 32 via the database 41, and then determines whether the requested call set-up requests are allowed.

In particular, the CAM 34 compares the limit network resource set by the PRD 31 with the current resource identified via the database 41, and allows the call when the network resources to be allocated for the received call are available.

The PIM 33 generates a command to set the policy to be transmitted from the PRD 31 to each component of the access network 23 and the metro network 22. The PIM 33 identifies the corresponding component to which the set policy is to be applied, and then generates a CLI command for controlling the corresponding component and an SNMP object. The PIM 33 can simultaneously apply one policy set by an operator to several components due to its CLI and SNMP characteristics. This is possible because the PIM 33 can convert the command per component with respect to one policy and transmit it.

The TM 35 continuously monitor the traffic usage status, the fault management module 36 continuously manages fault occurrence and the memory of the network components, and the PM 37 continuously manages the Central Processing Unit (CPU) resource status. The CLI module 40 and the SNMP module 39 are connected to the network components, and act to collect information from the components. The operation thereof will now be described in detail.

The TM 35 collects actual traffic information of each network via the traffic gathering module within the SNMP module 39 so as to identify the resource usage status of the network. In addition, the TM 35 compares the resource usage status with a theoretical network resource status managed by the TRM 32, and notifies the PRD 31 of any problems when they occur, thereby adjusting network resource allocation.

The FM 36 determines whether a fault occurs on each network via the fault discovery module within the CLI module 40 or the SNMP module 39 and the trap reception module within the SNMP module 39, and notifies the TRM 22 and the PRD 31 of the fault information when a fault occurs. Accordingly, the TRM 32 updates the topology and resource information of the network through operations of removing components of the faulted network, notifies the operator of the fault occurrence, and determines the network fault recovery policy.

The PM 37 collects performance information of each network component via the performance discovery module and the trap reception module included in the SNMP module 39. When a problem occurs with the performance of each constitutional component, the PM 37 notifies the fault management module 36 of the event so as to have it process the fault. Accordingly, the TRM 32 upgrades the component performance, and the PRD 31 notifies the operator of the update so as to have the operator control the component.

The SNMP module 39 and the CLI module 40 connect to the components of the access network 23 and the metro network 22, exchange various information, and transmit commands for controlling the components. The SNMP 39 module uses the SNMP command along with the component name to carry out communication, and the CLI module uses the CLI command to carry out communication.

The database 41 stores all data used in the INCP 30, that is, policy information, topology and resource information, traffic information, log data, and so forth.

The core network interworking module 38 interworks with the core network control platform 70. In particular, the core network interworking module 38 processes a CAC function using the core network control platform 70 in an End to End manner.

Examples of controlling and managing the network using a bandwidth will be described with reference to the above-described INCP 30.

The PRD 31 delivers a resource allocation command of each access network 23 to the PIM 33 in order to control the resources of the network according to a policy set by the operator. For example, when the link bandwidth within a specific network is 100 and the service class has four types, the operator can define a policy of allocating bandwidth per service. For example, 30%, 20%, 15%, and 10%, of the bandwidth can be allocated to the classes 0, 1, 2, and 3, respectively. The bandwidth ratios can also be varied according to the policy of the user.

The PIM 33 receiving the policy, i.e., the command to allocate the bandwidth per service class from the PRD 31, delivers the command to each constitutional component of the access network 23 and the metro network 22 so as to allow each component to modify the allocated bandwidth information.

After the bandwidth allocation of the network component to be controlled is completed, the TRM 32 receives the bandwidth allocation information from the PRD 31, or recollects the bandwidth allocation information via the CLI module 39 or the SNMP module 40, so as to complete the T/R table of the network. The virtual path management module 32C may also use the set bandwidth information to check the optimal virtual path between heterogeneous networks.

When a new component, a new link, or the like is generated on the network, the TRM 32 notifies the PRD 31 of the generation, and the PRD 31 can control the bandwidth of the new link and the new component according to the set policy. In the same way, when the optimal virtual path is changed, it can modify and store the change again.

The CAM 34 receives the call set-up request, and determines whether the call set-up request is allowed according to an extra bandwidth resource. When the received call set-up request is frequently rejected, the CAM 34 can notify the event policy module 31C within the PRD 31 of the rejection information, and can increase the bandwidth of the class where the call belongs to cope with the rejection. Each constitutional component and detailed operations of the INCP 30 will be described below.

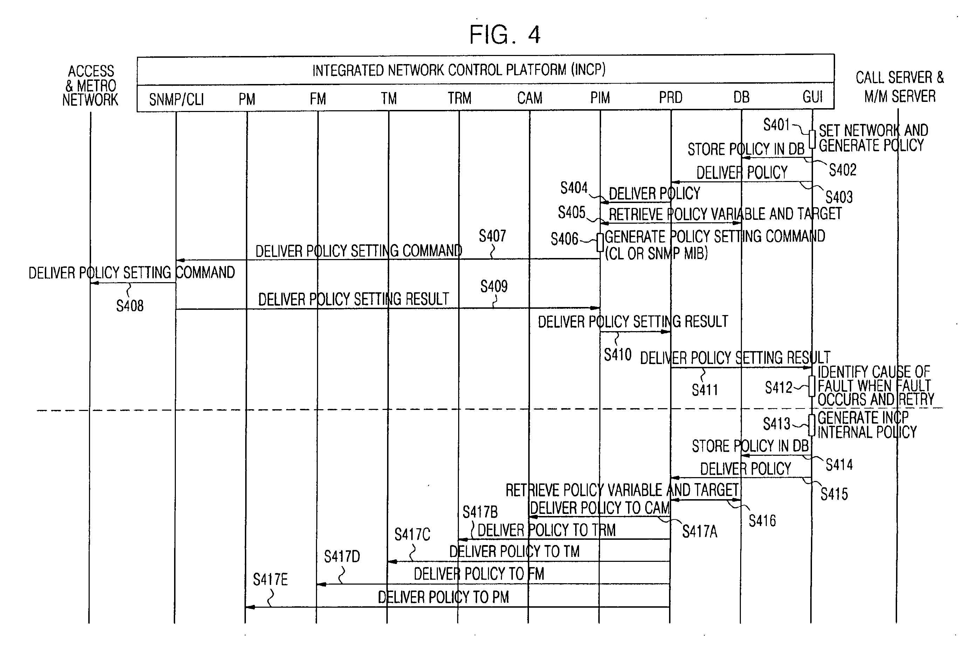

FIG. 4 is a flowchart showing the operation of a PRD in accordance with another exemplary embodiment of the present invention.

The PRD 31 first determines a policy for controlling components of the access network 23 or the metro network 22 according to a policy inputted by an operator.

The operator inputs the network operation policy via the operator interface 42 (S401). The input policy is stored in the database 41 (S402) and is simultaneously delivered to the PRD (S403). The PRD delivers the input policy to the PIM 33 (S404). The PIM 33 uses the database 41 to retrieve variables and corresponding components for carrying out the policy (S405), and generates the corresponding commands (S406). In this case, the commands are generated using the CLI or the SNMP MIB. The generated commands are transmitted to the SNMP module 39 or the CLI module 40 (S407), which in turn deliver the commands to the components of the access network 23 and the metro network 22 (S408). The SNMP module 39 or the CLI module 40 delivers the processed result of the policy to the operator interface 42 via the PIM 33 and the PRD 31 (S409 to S411). When a fault occurs during a procedure of setting the policy, the operator can identify the cause of the fault and retry setting the policy (S412). Such delivered commands allow the policy input by the operator to be applied to each constitutional component of the network.

In addition, the PRD 31 acts to control and manage the internal modules of the INCP 30 according to the policy of the operator.

The operator uses the operator interface 42 to set the internal policy for controlling the internal modules of the INCP 30 (S413). The internal policy is stored in the database 41 (S414), and is also delivered to the PRD 31 (S415). The SNMP and CLI commands do not need to be generated during a procedure of setting the internal policy, so that the PRD 31 directly retrieves the variables and corresponding components for carrying out the policy from the database 41 (S416). The PRD 31 delivers the policy to the corresponding retrieved component (S417). For example, the PRD 31 may transmit the policy to the CAM 34, the TRM 32, the TM 35, the fault management module 36, the PM 37, and so forth (S417A to S417E). The network policy does not need to be transmitted to all modules, and can be transmitted only to modules where it is to be applied.

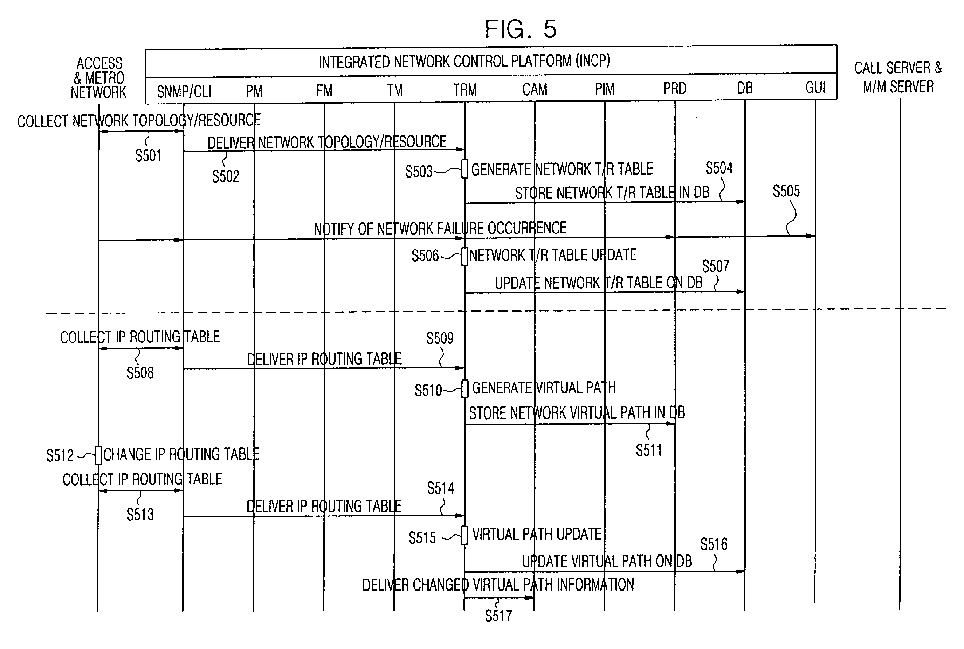

FIG. 5 is a flowchart showing the operation of a TRM in accordance with still another exemplary embodiment of the present invention.

Operations of the TRM 32 are mainly classified into generation and update of the T/R table, and generation and update of the virtual path.

As can be seen in FIG. 4, the PRD 31 carries out the procedure of setting the policy with respect to the components of the network (S401 to S408). In this case, the SNMP module 39 or the CLI module 40 carries out step S409, collects the network topology and resource information from the components of the access network 23 and the metro network 22 (S501), and delivers them to the TRM 32 (S502). The TRM 32 uses the collected network topology and resource information to generate the T/R table (S503). Such a generated T/R table can be stored in the database 41 (S504).

When a fault occurs in a component of the access network 23 and the metro network 22, the fault occurrence information is transmitted to the operator interface 42 via the SNMP module 39/CLI module 40, the TRM 32, and the PRD 31 (S505). In this case, the TRM 31 updates the T/R table to reflect the fault occurrence information (S506). The TRM 32 stores the updated T/R table in the database (S507). When the fault occurs, the TRM 32 carries out steps S505 to S507, and the PRD 31 carries out step S412.

In addition, the SNMP module 39 or the CLI module 40 collects the IP routing table from the components of the access network 23 and the metro network 22 (S508), and transmits the collection to the TRM 32 (S509). The TRM 32 uses the IP routing table to generate a virtual path (S510), and stores it in the database 41 (S511). The virtual path corresponds to path information for optimally exchanging data between complex networks. When the IP routing table on the network is changed (S512), the SNMP module 39 and the CLI module 40 recollect the changed IP routing table (S513), and deliver the changed IP routing table to the TRM 32 (S514). The TRM 32 uses the recollected IP routing table to modify the virtual path (S515), and stores the updated virtual path in the database 41 (S516). In addition, the TRM 32 notifies the CAM 34, using the virtual path, that is not updated with the virtual path update (S517).

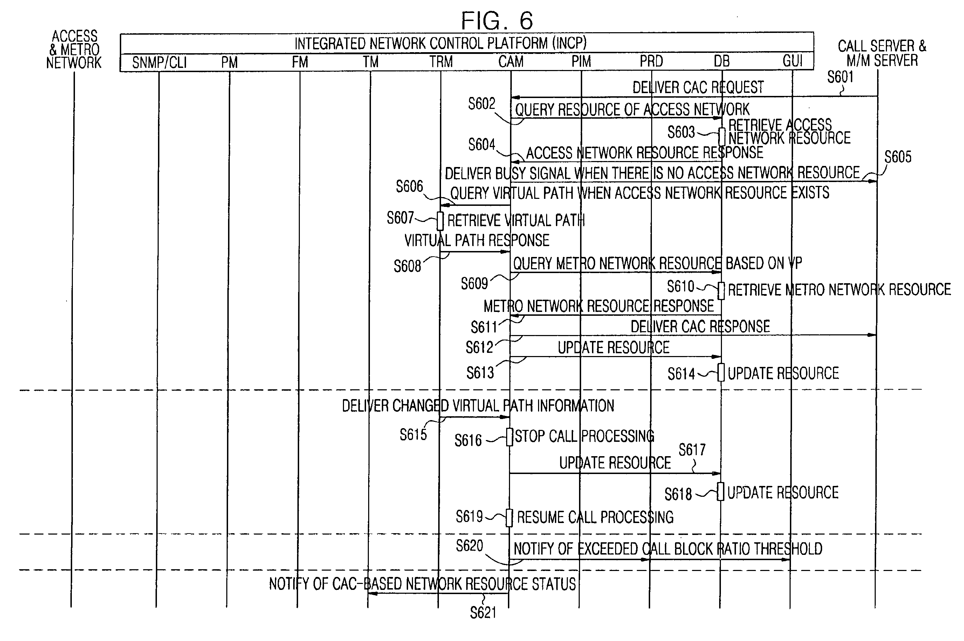

FIG. 6 is a flowchart showing the operation of a CAM in accordance with yet another exemplary embodiment of the present invention.

The call server or the multimedia server delivers a CAC request to the CAM 34 (S601). The CAM 34 queries the database 41 about resources of the access network 23 where the call needs to be set (S602). The database 41 retrieves the stored resources of the access network 23 (S603), and responds to the CAM 34 with the retrieved result (S604). When the access network 23 lacks the necessary resources, it delivers a busy signal to the call server or the multimedia server transmitting the CAC request (S605).

When the resources of the access network are present, the CAM 34 requests the TRM 32 to inquire about the virtual path (S606). The TRM 32 inquires about the virtual path (S607), and responds to the CAM 34 with the result (S608). Accordingly, it can be found through which components of the metro network packets are optimally transmitted using the virtual path.

Subsequently, resources should be checked to identify whether the optimal virtual path found in steps S606 to S608 can be used. The CAM 34 retrieves the resources of the metro network 22 according to the virtual path. The retrieved resources are displayed using the virtual path (VR)-based metro network resource inquiry. Steps of retrieving the resources of the metro network 22 (S609 to S611) are almost the same as steps S602 to S604, and thus a description thereof will be omitted.

The CAM 34 transmits the resource status of the metro network to the soft switch or the multimedia server (S612). In detail, the CAM returns a busy signal when the metro network lacks sufficient resources, and returns an OK signal when metro network has sufficient resources. When the OK signal is returned, the soft switch or the multimedia server links a new call, so that the topology and the resource status of the network will be changed. Accordingly, the CAM 34 issues a command to update the resources to the database 41 (S613), and the database 41 updates the change in resource status of the network according to the new call set-up (S614).

When the optimal virtual path is changed in step S614, the TRM 32 determines the optimal virtual path again, and delivers the determination result to the CAM 34 (S615). In this case, the CAM 34 pauses the call processing step (S616), and delivers the changed virtual path information to the database 41 (S617). The database 41 updates the resource status according to the changed virtual path information (S618), and then the CAM 34 resumes the paused call processing step (S619). These steps allow the call between the multimedia server and the receiving terminal to be set.

When the new call is set, it may exceed the call setting ratio threshold of the network. When such a situation occurs, the CAM 34 notifies the operator of the exceeded call block ratio threshold using the user interface 41 (S620).

The CAM 34 also notifies the TM that the new call is set (that is, the CAC-based network resource status is changed) (S621).

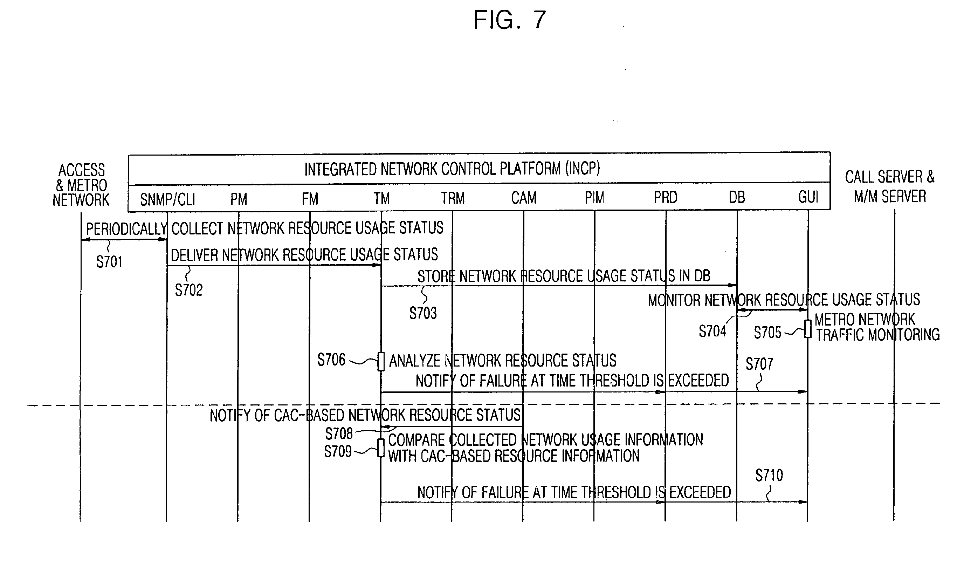

FIG. 7 is a flowchart showing the operation of a TM in accordance with another exemplary embodiment of the present invention.

As in the case of FIG. 5, the SNMP module 39 or the CLI module 40 periodically communicates with the components of the access network 23 or the metro network 22 to collect network resource usage status information (S701). The network resource status information collected is transmitted to the TM 35 (S702). The TM 35 can store the collected network resource usage status information in the database 41 (S703), and can provide it to the operator (S704) using the operator interface 42. Accordingly, the operator can monitor the traffic status of each network (S705). The TM 35 analyzes the network resource status (S706), and when the traffic of the network being used exceeds a traffic threshold, TM 35 notifies the PRD 31 and the operator interface 42 (S707).

When the TM 35 is notified of a change in CAC-based network resource status by the CAM 34 according to step S621 of FIG. 6 (S708), the TM 35 compares the traffic information collected in real time with the changed network resource information (S709). Such steps are carried out by a method similar to that of step S706. In the same way, when the resources being used exceed the threshold notified by the CAM 34, the TM notifies the PRD 31 and the operator interface 42.

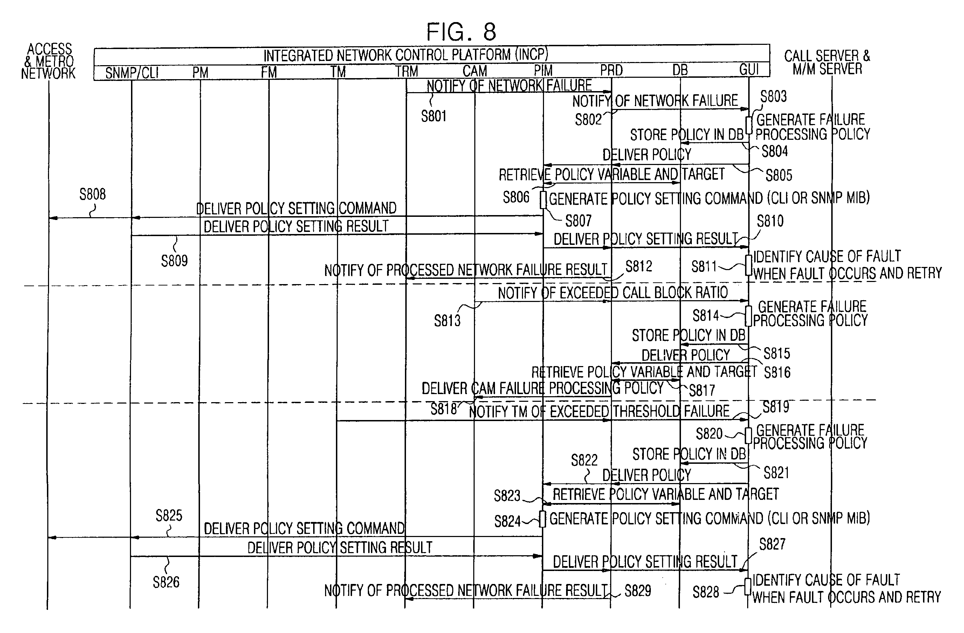

FIG. 8 is a flowchart showing the operation performed when an event of a PRD is generated in accordance with yet another exemplary embodiment of the present invention.

When the PRD 31 is first notified of a network fault by the TRM 32 (S801), the PRD 31 uses the operator interface 42 to display the fault occurrence status (S802), and receives the corresponding policy from the operator (S803). The input policy is stored in the database 41 (S804), and is simultaneously transmitted to the PIM 33 (S805). The PIM 33 retrieves the variables or the target for carrying out the policy from the database 41 (S806), and generates a command for setting the policy (S807). The command may also be generated using the CLI or the SNMP MIB. The generated command is delivered to components of the access network 23 or the metro network 22 via the SNMP module 30 and the CLI module 40 (S808). In addition, the SNMP module 39 and the CLI module 40 collect the set result of the policy from the components, and deliver it to the PIM 33, the PRD 31, and the operator interface 41 (S809 and S810). When a fault occurs in the step of setting the policy, the operator identifies the cause and re-inputs a modified policy (S811), and the step of setting the policy is performed again in the same manner as described above. After the policy is set, the PRD 31 notifies the TRM 32 of the result of processing the network fault (S812).

Subsequently, when the PRD 31 is notified of the exceeding of the call block ratio threshold by the CAM 34 in step S620 of FIG. 6, the PRD 31 has the operator interface 42 display the event (S813). Accordingly, the operator generates and inputs the policy for coping with the event. Steps S814 to S817 for the policy are similar to steps S803 to S806. However, the CAM 34 is an internal module of the INCP 30, and thus the input policy does not pass through the SNMP module 39 and the CLI module 40, but is directly delivered to the CAM 34. The CAM 34 is notified of the result of processing of the fault as in steps S813 to S817 described above (S818).

When the PRD 31 is notified of the exceeding of the threshold by the TIM 35 in step S701 (S819), the PRD 31 uses the same method as described in steps S803 to S812 to manage the components of the access network 23 and the metro network 22.

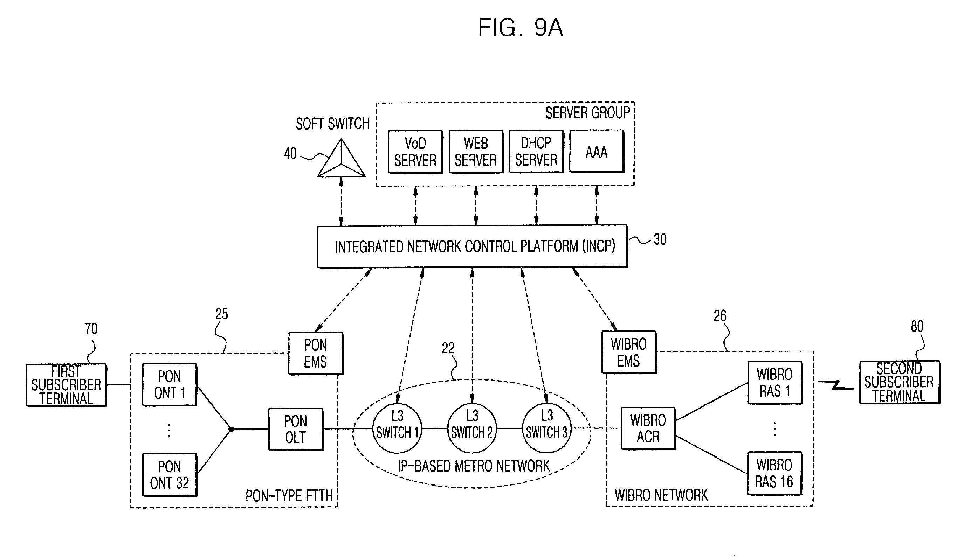

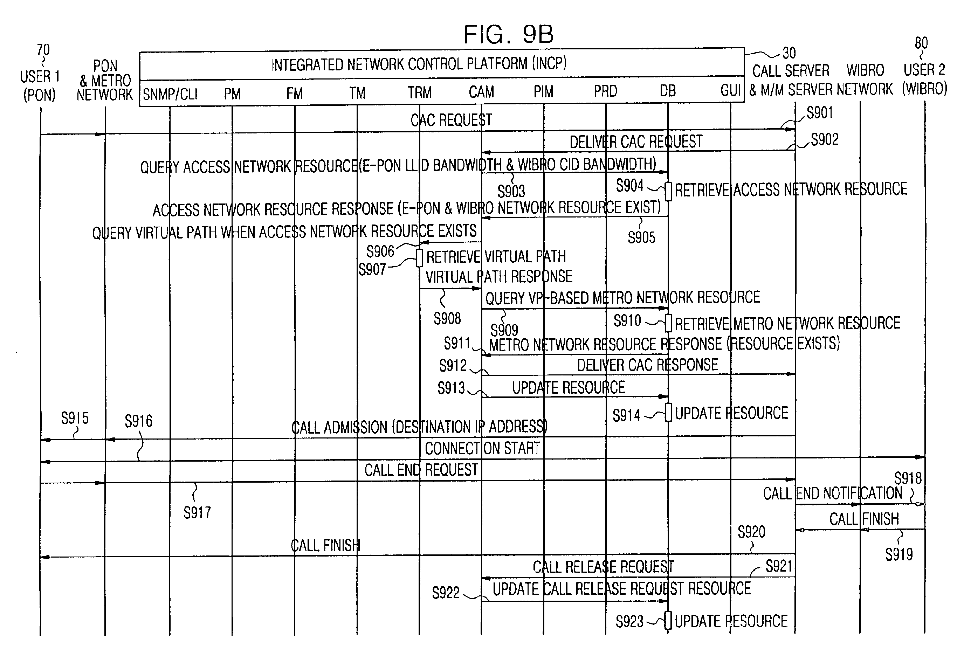

FIG. 9A is a block diagram showing the configuration of a network for a VoIP call between a PON user and a Wibro user in accordance with yet another exemplary embodiment of the present invention, while FIG. 9B is a flowchart showing the operation of the complex network control system of FIG. 9A.

As shown in FIG. 9A, the first subscriber terminal 70 using the PON and the second subscriber terminal 80 using the Wibro network have a VoIP call via the PON 25 as the access network, the IP-based metro network 22, and the Wibro network 26.

In this case, the INCP 30 controls the PON EMS included in the PON 25, the Wibro EMS included in the Wibro network 26, the L3 switch of the metro network 22, and so forth. Control operations of the INCP 30 will be described below with reference to FIG. 9B.

The first subscriber terminal 70 of the user on the PON makes a call set-up request. The call set-up request of the first subscriber terminal 70 is first transmitted to the call server or the multimedia server via the PON 25 (S901). The call server or the multimedia server receiving the call set-up request requests the CAM 34 of the INCP 30 to authenticate the call (S902).

The CAM 34 requests the database 41 to check the resources of the access network (S903). In this regard, the CAM 34 can make the request merely by delivering, to the database 41, the information of the access network 23 to which the first subscriber terminal 70 and second subscriber terminal 80 belong and the network resources list to be checked. In the present embodiment, the CAM 34 requests the database to check resources with respect to the Logical Link Identifier (LLID) bandwidth of the E-PON 25 and the Channel Identifier (CID) bandwidth of the Wibro network 26. The database 41 retrieves the stored access network resources (S904), and reports the result to the CAM 34 (S905). It can be seen that the database 41 transmits the response that the resources are present to the CAM 34 in the present embodiment. The CAM 34 in turn requests the TRM 32 to inquire about the virtual path (S906). The TRM 32 inquires about the virtual path, which is the optimal transmission path between the PON 25 and the Wibro network 26 (S907), and reports the result to the CAM 34 (S908).

When the CAM 34 needs to carry out communication on the virtual path, it requests the resources of the metro network 22 through which the communication is carried out (S909). In the same way, the database 41 retrieves the resources of the metro network (S910), and transmits the response that the resources are present to the CAM 34 (S911).

Resources of the PON 25, the Wibro network 26, and the metro network 22 are sufficient, and thus the CAM 34 transmits the response message that sufficient resources are present to the call server or the multimedia server (S912). The CAM 34 also issues to the database 41 a command to update the resource status information (S913), and the database 41 in turn updates the resource status (S914). In this case, when the network resources are insufficient, the INCP 30 can reset the policy with respect to the network having insufficient resources so as to allow the CAC. For example, when the network resources are insufficient, there may be a policy that changes the bandwidth allocated to each service class so as to obtain sufficient bandwidth for the VoIP call.

The call server or the multimedia server transmits a call admission message, including the address information of the second subscriber terminal 80, to the first subscriber terminal 70 (S915). The first subscriber terminal 70 uses the call admission message to set up a call with the second subscriber terminal 80 on the Wibro network 26 so that the VoIP call is carried out (S916).

When the VoIP call is terminated, the first subscriber terminal 70 transmits a Call End Request to the call server or the multimedia server (S917). The call server or the multimedia server notifies the second subscriber terminal 80 of the call termination (S918). The call server receiving the response with respect to the call termination from the second subscriber terminal 80 notifies the first subscriber terminal 70 of the call release (S920). The call server also notifies the CAM 34 of the call release between the first subscriber terminal 70 and second subscriber terminal 80 (S921), the CAM 34 issues to the database 41 a command to update the resources (S922), and the database 41 updates the resources (S923).

As described above, according to the system and method for controlling and managing heterogeneous networks, i.e., an access network and a metro network, of the present invention, resource status and performance status of the access network and the metro network can be continuously controlled and managed so that a high-quality and large-capacity service QoS can be provided to users, and seamless QoS can be guaranteed for communication between heterogeneous networks.

While the present invention has been described with reference to exemplary embodiments thereof, it will be understood by those skilled in the art that various changes in form and detail may be made therein without departing from the scope of the present invention as defined by the following claims.

## Claims

1. A method of controlling a Voice over Internet Protocol (VoIP) call between first and second terminals belonging to heterogeneous access networks, the method comprising the steps of:
requesting, at the first terminal, call set-up to perform the VoIP call with the second terminal;
collecting available bandwidth information of an access network to which each of the first and second terminals belongs, and available bandwidth information of a metro network linked to the access network; and
allowing the call set-up request when available bandwidths of the access network and the metro network are larger than a bandwidth for the VoIP call.

2. The method according to claim 1, further comprising the step of:
identifying an optimal virtual path linking the heterogeneous access networks to each other using the available bandwidth information, and
linking a call between the first and second terminals using the optimal virtual path.

3. The method according to claim 1, further comprising the step of:
after the call set-up is completed according to the call set-up request, updating the available bandwidth information of the metro network and
the access network to which the first and second terminals belong.

4. The method according to claim 1, further comprising the step of:
reallocating bandwidth of a network to each of a plurality of classes when the network has insufficient available bandwidth.

5. A complex network management system including at least one access network and a metro network, said system comprising:
a Topology/Resource Management Module (TRM) for collecting and
managing resource information of a complex network;
a Policy Rule Decision Module (PRD) for determining a limit network resource authenticating a call transmitted to one of said at least one access network and the metro network, and a policy with respect to the limit network resource; and
a Connection Admission Control Module (CAM) for comparing the resource information of the complex network with the limit network resource, and for determining whether a Call Admission Control (CAC) request to be transmitted to the complex network is allowed.

6. The complex network management system according to claim 5, wherein the limit network resource comprises at least one of topology, bandwidth, delay time, and delay variance of the complex network.

7. The complex network management system according to claim 5, wherein the access network comprises at least one of an Active Optical Network (AON)-type Fiber To The Home (FTTH) network, a Passive Optical Network (PON)-type FTTH network, a Wibro Network, and a Wireless Local Area Network (WLAN).

8. The complex network management system according to claim 5, further comprising:
a Policy Interface Module (PIM) for converting a policy received from the PRD to a protocol capable of being analyzed in each of said at least one access network and the metro network, and for transmitting the protocol to each of said at least one access network and the metro network.

9. The complex network management system according to claim 8, wherein the PIM identifies a target network to which the policy is to be applied using a Management Information Base (MIB), and generates one of a Command Line Interface (CLI) command and a Simple Network Management Protocol (SNMP) Object which is capable of being analyzed by the target network.

10. The complex network management system according to claim 5, further comprising:
a Traffic Monitoring Module (TM) for measuring a traffic status of the complex network, and for notifying the PRD when measured traffic exceeds the limit network resource.

11. The complex network management system according to claim 5, further comprising:
a fault management module for monitoring whether a fault occurs in a component of the complex network, and for notifying the PRD when the fault occurs.

12. The complex network management system according to claim 5, further comprising:
a Performance Management module (PM) for collecting performance information of each component of the complex network, and for notifying the PRD when a fault occurs in performance of said each component.

13. The complex network management system according to claim 5, wherein the PRD further comprises an event policy module which, upon receipt of at least one of a traffic exceeding event, a fault occurrence event, and a performance fault event of a component from each network, displays the event to an operator, and delivers a policy for coping with the event to the PIM.

14. The complex network management system according to claim 5, wherein the TRM comprises a virtual path management module for determining an optimal virtual path linking heterogeneous access networks to each other using resource information of the metro network.

15. The complex network management system according to claim 5, wherein the TRM comprises a topology/resource table which stores the resource information of the complex network in the form of a list, and which updates the resource information when the resource information changes.

16. A method of managing a complex network which includes at least one access network and a metro network, said method comprising the steps of:
collecting and managing resource information of the complex network;
determining a limit network resource for authenticating a call to be transmitted to one of the access network and the metro network, and a policy with respect to the limit network resource; and
comparing the resource information of the complex network with the limit network resource, and determining whether a Call Admission Control (CAC) request to be transmitted to the complex network is allowed.

17. The method according to claim 16, further comprising the step of:
converting the determined policy to a protocol capable of being analyzed in each of the access network and the metro network, and transmitting the protocol to said each of the access network and the metro network.

18. The method according to claim 16, wherein the network resource comprises at least one of topology, bandwidth, delay time, and delay variance of the network.

19. The method according to claim 16, wherein the access network comprises at least one of an Active Optical Network (AON)-type Fiber To The Home (FTTH) network, a Passive Optical Network (PON)-type FTTH network, a Wibro Network, and a Wireless Local Area Network (WLAN).

20. The method according to claim 16, further comprising the step of:
measuring a traffic status of the complex network, and displaying to an operator when the measured traffic exceeds the limit network resource.

21. The method according to claim 16, further comprising the step of:
monitoring whether a fault occurs in components of the complex network, and displaying to an operator when the fault occurs.

22. The method according to claim 16, further comprising the step of:
collecting performance information of components of the complex network, and displaying to an operator when a fault occurs in performance of any of the components.
